# EUROPEAN PATENT SPECIFICATION

(11) **EP 1 454 077 B1**
(45) Date of publication and mention of the grant of the patent: **07.02.2007**
(21) Application number: 02781438.3
(22) Date of filing: 05.12.2002
(51) Int. Cl.: F16D 65/092, F16D 65/097

(54) **A BACKPLATE AND A METHOD OF MAKING A BACKPLATE**
RÜCKENPLATTE SOWIE VERFAHREN ZU IHRER HERSTELLUNG
PLAQUE ARRIERE ET PROCEDE DE FABRICATION DE PLAQUE ARRIERE

(30) Priority: 07.12.2001 GB 0129302
(43) Date of publication of application: 08.09.2004
(73) Proprietor: Meritor Heavy Vehicle Braking Systems (UK) Limited, Cwmbran, Gwent NP44 3XU (GB)
(72) Inventor: ROBERTS, Paul, Newport NP20 5QU (GB)
(74) Representative: Foot, Paul Matthew James
(86) International application number: PCT/GB2002/005508
(87) International publication number: WO 2003/048598

(56) References cited:
- EP-A- 0 705 993
- DE-A- 4 331 623
- DE-A- 19 706 123
- DE-A- 19 954 309
- FR-E- 84 348
- US-A- 3 357 523
- US-A- 5 743 361
- PATENT ABSTRACTS OF JAPAN vol. 1999, no. 08, 30 June 1999 (1999-06-30) -& JP 11 082568 A (NAGAHARA SATOSHI), 26 March 1999 (1999-03-26)

## Description

The present invention relates to a disc brake pad, a backplate for supporting friction material and a method of making a disc brake pad, in particular, but not exclusively, for use on heavy vehicles such as trucks.

Backplates of vehicle disc brake pads essentially perform two functions: they provide a solid support for slidably mounting the friction material within the brake carrier in such a way to transmit shear loads induced on the friction material during braking to the carrier, and they transmit and distribute the pressure applied by brake tappets during braking evenly to the surface of the friction material to ensure even wear of the friction material over its service life.

In order to perform the former of these two functions it is common for resilient means such as a leaf-type spring to hold the pad radially in the carrier whilst permitting movement towards and away from an associated brake disc thereby prevent rattling of the pad in use. To ensure that the friction material is securely attached to the backplate, some form of positive location is usually provided on the backplate, such as holes or recesses into which the material can extend or steel mesh welded on to the backplate around which the friction material may be formed.

Each brake is generally provided with one or more tappets that apply the braking force over a small area relative to the total area of the backplate. In order to perform the function of distributing the pressure from the brake tappet(s) it has hitherto been necessary to provide a relatively thick solid steel backplate that is punched or otherwise cut from steel sheet and is resistant to bending, or alternatively to provide an intermediate spreader plate in order to distribute the load over a thinner, although still substantial backplate. If a thick backplate is used, this constitutes a substantial proportion of the overall mass of the pad when unworn (e.g. approximately 30%). Once the friction material has been worn away in use, the backplate is usually thrown away.

This means that any reduction in the mass of the backplate that can be achieved will result in environmental benefits and a reduction in the cost of materials. A lower backplate mass additionally means that a lower strength, and therefore lower mass (and a potentially lower cost) pad spring may be sufficient to hold the backplate in place.

A further disadvantage of prior art backplates for heavy vehicles is that high capacity stamping machines are required in their manufacture, with a consequential high capital investment being required to set up a manufacturing plant.

Attempts have been made to overcome these problems, see eg. US 57 43 361, JP 11082568 or DE 4331623.

The invention seeks to improve these prior art back plates and disc brake pads.

One aspect of the present invention provides a disc brake pad in accordance with claim 1 of the appended claims.

A second aspect of the present invention provides a backplate in accordance with claim 5 of the appended claims.

A further aspect of the present invention provides a method of making a brake pad in accordance with claim 8 of the appended claims.

Embodiments of the present invention will be described, by way of example only, with reference to the accompanying drawings in which:
FIGURE 1 is a perspective view of the rear face of a disc brake pad incorporating a backplate according to one embodiment of the present invention;
FIGURE 2 is a cross-sectional view of line X-X of Figure 1; and
FIGURE 3 is a perspective view of the front of a disc brake pad according to second embodiment of the present invention.

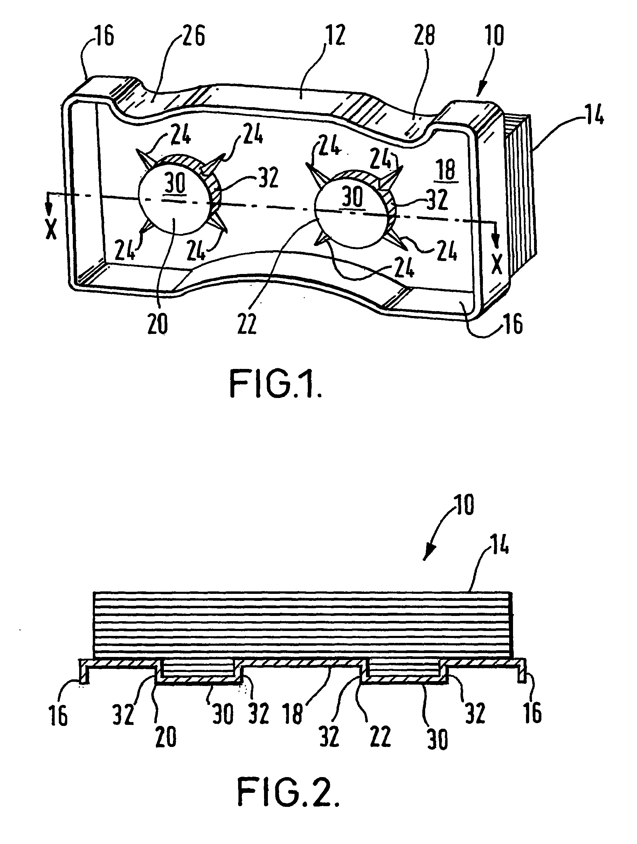

Referring to Figures 1 and 2, a disc brake pad 10 comprises a steel backplate 12 and sacrificial friction material 14. The friction material may be of any suitable known type, and does not form part of the invention. The backplate 12 is formed of relatively thin sheet metal material, typically sheet steel. Backplates according to the present invention for use with heavy vehicles are formed from sheet steel having a thickness of between approximately 1mm and 3mm, preferably approximately 2mm. This contrasts with prior art backplates, which generally have a thickness of 8mm to 9mm.

It can be seen that the backplate comprises a substantially planar body portion 18 and a peripheral flange portion 16 arranged at substantially 90° to the body and extending away from the friction material 14.

In this embodiment, the backplate 12 is further provided with a pair of raised bosses 20 and 22 positioned so as to be contacted by tappets (not shown) of an actuating portion of the disc brake and thereby urge the friction material 14 into contact with a brake disc (not shown) to effect braking. The bosses are substantially circular in shape and comprise two raised tappet contacting faces 30 that are substantially parallel to the plane of the body portion 18 and are interconnected therewith by skirt portions 32. In this embodiment, the skirt portions 32 are substantially perpendicular to the planes of body portion 18 and faces 30.

In other classes of embodiment, the number of projections 20 and 22 may be adjusted according to the number of tappets provided on the brake actuating portion, or a single projection may be provided for two or more tappets. The shape and depth of the bosses may be adjusted as required. It may appreciated by those skilled in the art that the bosses 20 and 22 serve to stiffen the backplate and distribute the load applied by the brake tappet(s) more evenly over the friction material 14, thereby reducing the tendency of the backplate 12 and friction material to bend. The bosses 20 and 22 advantageously assist in the positive location of the friction material 14 to the backplate 12, thus reducing the risk of the friction material detaching under shear loads.

In a preferred embodiment of the invention, radially outwardly extending ribs 24 may be formed around the base circumference of the bosses 20 and 22 that serve to further enhance the load spreading characteristics thereof. It can be seen that in Figure 1, four ribs 24 are provided for each boss, but this may be adjusted according to the particular requirements and characteristics of a backplate.

It can be further seen from Figure 1 that the upper portion of flange 16 is provided with a pair of recesses 26 and 28 that are shaped so as to locate an appropriately dimensioned pad spring (not shown). The shape of recesses 26 and 28 may be altered so as to accommodate various shapes of pad spring.

The backplate 12 is preferably manufactured from a blank of relatively thin sheet steel that is formed between appropriately contoured dies in a press so as to form the peripheral flange 16 and/or bosses 20 and 22. The backplate is preferably cold formed although hot forming is also envisaged. Some localised thinning of the material may occur during pressing but this is largely restricted to the corners where flanges formed on the radial edges and circumferential edges intersect, and to the boss areas.

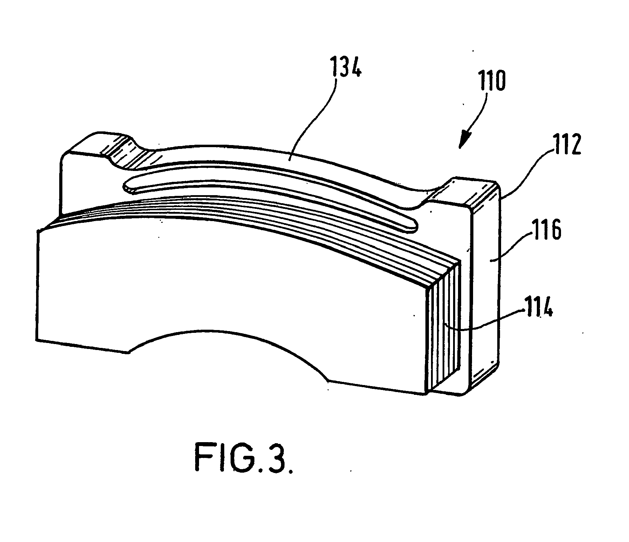

Turning now to Figure 3, in which an alternative embodiment of backplate is shown and is which like numerals have, where possible been used to designate like parts, with the addition of the prefix "1". It can be seen that in this embodiment, a pad spring 134 is formed integrally with the backplate again preferably using the press forming process described above. One advantage of providing an integral pad spring 134 is that the need for a separate spring component to be manufactured is negated. This may provide additional cost and weight savings.

It should be understood that numerous changes may be made within the scope of the present invention. For example, the backplate may be manufactured from materials other than steel, such as aluminium, provided the materials have appropriate strength and drawing characteristics. Alternative manufacturing methods may be employed such as drop forging, fabrication, or die casting. Stiffening features other than a flange may be provided in the backplate and the flange may not necessarily extend around the entire periphery of the backplate. For example, a flange may be provided on one or more of the radial or circumferential edges of the backplate only. The backplate may be used in relation to pads intended for fitment to other vehicles such as cars and the like.

An integral pad spring may be provided in backplates manufactured using alternative methods to the drawing methods described above. The volume defined by the peripheral flange may be at least partially filled with insulating material so as to inhibit the transfer of friction induced heat to the brake tappet(s), whose seals may otherwise be damaged by such high temperatures.

## Claims

1. A disc brake pad (10) comprising friction material and a backplate (12) for supporting the friction material (14), the backplate comprising a substantially planar portion (18) of sheet metal comprising a first face to which the friction material (14) is secured and a stiffening flange (16) extending around the entire peripheral edge of the planar portion (18) and extending away from the friction material (14, 114) and wherein the flange (16) is disposed substantially perpendicular to the substantially planar portion (18) of the backplate; **characterised in that** the flange (16) is provided with recesses (26, 28) arranged so as to permit the mounting of a pad spring thereon.

2. A disc brake pad (18) according to any Claim 1 wherein the flange (16) is press formed.

3. A disc brake pad (18) according to any preceding Claim wherein the backplate further comprises a boss (20, 22) extending away from the first face and arranged so as to be capable of transmitting a load induced by a brake actuator to the friction material (14).

4. A disc brake pad (10) according to Claim 3 wherein the boss (20, 22) is provided with a stiffening rib (24) extending therefrom, the rib (24) preferably extending radially from the boss (20, 22).

5. A backplate (112) for supporting friction material (114) of a disc brake pad (110), **characterised in that** the backplate is provided with an integral spring (134) and a peripheral stiffening flange (116), wherein the spring (134) is integrally formed with the peripheral stiffening flange (116) of the backplate (112) arranged so as to resiliently resist movement in a direction substantially in a plane as defined by the backplate (112).

6. A backplate according to Claim 5 wherein the spring (134) is provided proximate the radially outer edge of the backplate (112) so as to resiliently resist radially outward movement of the brake pad (110) in a direction substantially in a plane as defined by the backplate (112), in use

7. A backplate (112) according to Claim 5 wherein the backplate (112) further comprises a press formed boss arranged so as to transmit a load induced by a brake actuator to the friction material (114), in use.

8. A method of making a disc brake pad (10) as defined in claim 1 comprising the steps of:
i) cutting a blank from a metal sheet;
ii) drawing the blank in a press so as to form a backplate (12) having a substantially planar portion (18) and a stiffening flange (16) extending around the entire periphery of the planar portion (18).

## Patentansprüche

1. Scheibenbremsklotz (10) mit Reibmaterial und einer Grundplatte (12) zum Tragen des Reibmaterials (14), wobei die Grundplatte einen im Wesentlichen ebenen Abschnitt (18) aus Blech mit einer ersten Seite, an der das Reibmaterial (14) befestigt ist, und einem Versteifungsflansch (16) umfasst, der sich um den gesamten Umfangsrand des ebenen Abschnitts (18) herum erstreckt und sich von dem Reibmaterial (14) weg erstreckt, und wobei der Flansch (16) im Wesentlichen senkrecht zu dem im Wesentlichen ebenen Abschnitt (18) der Grundplatte angeordnet ist; **dadurch gekennzeichnet, dass** der Flansch (16) mit Ausnehmungen (26, 28) versehen ist, die so angeordnet sind, dass eine Bremsklotzfeder daran befestigt werden kann.

2. Scheibenbremsklotz (10) nach Anspruch 1, bei dem der Flansch (16) pressgeformt ist.

3. Scheibenbremsklotz (10) nach einem der vorhergehenden Ansprüche, bei dem die Grundplatte ferner einen Vorsprung (20, 22) umfasst, die sich von der ersten Seite weg erstreckt und so angeordnet ist, dass sie eine durch einen Bremsenaktuator erzeugte Kraft auf das Reibmaterial (14) übertragen kann.

4. Scheibenbremsklotz (10) nach Anspruch 3, bei dem der Vorsprung (20, 22) mit einer davon ausgehenden Versteifungsrippe (24) versehen ist, wobei sich die Rippe (24) vorzugsweise radial vom Vorsprung (20, 22) erstreckt.

5. Grundplatte (112) zum Tragen von Reibmaterial (114) eines Scheibenbremsklotzes (110), **dadurch gekennzeichnet, dass** die Grundplatte mit einer integrierten Feder (134) und einem umlaufenden Versteifungsflansch (116) versehen ist, wobei die Feder (134) mit dem umlaufenden Versteifungsflansch (116) der Grundplatte (112) einstückig ausgebildet ist, so dass sie einer Bewegung in einer Richtung im Wesentlichen in einer durch die Grundplatte (112) definierten Ebene elastisch widerstehen kann.

6. Grundplatte nach Anspruch 5, bei der die Feder (134) in der Nähe des radial äußeren Randes der Grundplatte (112) vorgesehen ist, um im Gebrauch einer radial auswärts gerichteten Bewegung des Bremsklotzes (110) in einer Richtung im Wesentlichen in einer durch die Grundplatte (112) definierten Ebene elastisch zu widerstehen.

7. Grundplatte (112) nach Anspruch 5, wobei die Grundplatte (112) ferner einen pressgeformten Vorsprung umfasst, die so angeordnet ist, dass sie im Gebrauch eine durch einen Bremsenaktuator erzeugte Kraft auf das Reibmaterial (114) übertragen kann.

8. Verfahren zur Herstellung eines Scheibenbremsklotzes (10) nach Anspruch 1 mit den folgenden Schritten:
i) Schneiden eines Rohlings aus einem Blech;
ii) Ziehen des Rohlings in einer Presse, um eine Grundplatte (12) zu bilden, die einen im Wesentlichen ebenen Abschnitt (18) und einen Versteifungsflansch (16) aufweist, der sich um den gesamten Umfang des ebenen Abschnitts (18) herum erstreckt.

## Revendications

1. Plaquette de frein à disque (10) comprenant une garniture et un disque de fixation de frein (12) destinés à supporter la garniture (14), le disque de fixation de frein comprenant une portion substantiellement en plan (18) d'un métal en feuille comprenant une première face à laquelle la garniture (14) est solidement fixée et une bride de renfort (16) s'étendant tout autour du bord périphérique de la portion en plan (18) et s'éloignant de la garniture (14) et dans laquelle la bride (16) est disposée de manière substantiellement perpendiculaire à la portion substantiellement en plan (18) du disque de fixation de frein ; **caractérisée en ce que** la bride (16) est pourvue d'évidements (26, 28) agencés de sorte à permettre le montage d'un ressort de plaquette sur celle-ci.

2. Plaquette de frein à disque (10) selon la revendication 1, dans laquelle la bride (16) est formée sous pression.

3. Plaquette de frein à disque (10) selon l'une quelconque des revendications précédentes, dans laquelle le disque de fixation de frein comprend en outre un bossage (20, 22) s'étendant loin de la première face et agencé de sorte à être capable de transmettre une charge induite par un récepteur de freinage à la garniture (14).

4. Plaquette de frein à disque (10) selon la revendication 3, dans laquelle le bossage (20, 22) est pourvu d'une nervure de renforcement (24) s'étendant à partir de celui-ci, la nervure (24) s'étendant préférablement de manière radiale du bossage (20, 22).

5. Disque de fixation de frein (112) destiné à supporter la garniture (114) d'une plaquette de frein à disque (110), **caractérisé en ce que** le disque de fixation de frein est équipé d'un ressort intégré (134) et d'une bride de renfort périphérique (116), dans lequel le ressort (134) est formé d'un seul tenant avec la bride de renfort périphérique (116) du disque de fixation de frein (112) agencé de sorte à résister de manière élastique à un mouvement dans une direction substantiellement en plan définie par le disque de fixation de frein (112).

6. Disque de fixation de frein selon la revendication 5, dans lequel le ressort (134) est disposé à proximité du bord extérieur radial du disque de fixation de frein (112) de sorte à résister de manière élastique à un mouvement radial vers l'extérieur de la plaquette de frein (110) dans une direction substantiellement en plan définie par le disque de fixation de frein (112), en utilisation.

7. Disque de fixation de frein (112) selon la revendication 5, dans lequel le disque de fixation de frein (112) comprend en outre un bossage formé sous pression agencé de sorte à transmettre une charge induite par un récepteur de freinage à la garniture (114), en utilisation.

8. Procédé de fabrication d'une plaquette de frein à disque (10) selon la revendication 1 comprenant les étapes consistant à :
i) découper un flanc d'une feuille de métal ;
ii) amener le flanc dans une presse de sorte à former un disque de fixation de frein (12) ayant une portion substantiellement en plan (18) et une bride de renfort (16) s'étendant tout autour de la périphérie de la portion en plan (18).
